# EUROPEAN PATENT SPECIFICATION

(11) **EP 1 701 773 B1**
(45) Date of publication and mention of the grant of the patent: **30.03.2011**
(21) Application number: 05701779.0
(22) Date of filing: 06.01.2005
(51) Int. Cl.: B01D 1/22, B01D 1/00, B04B 15/08, B04B 15/02

(54) **SOLVENT EVAPORATOR**
LÖSUNGSMITTELVERDAMPFER
EVAPORATEUR POUR SOLVANTS

(30) Priority: 06.01.2004 GB 0400192
(43) Date of publication of application: 20.09.2006
(73) Proprietor: Vapourtec Limited, Place Farm Ingham Suffolk IP31 1NQ (GB)
(72) Inventor: GUTHRIE, Duncan, Alpheton Suffolk CO10 9BW (GB)
(74) Representative: Gill, Stephen Charles
(86) International application number: PCT/GB2005/000008
(87) International publication number: WO 2005/065799

(56) References cited:
- EP-A- 1 110 061
- DE-A1- 4 319 498
- US-A- 2 512 604
- US-A- 3 871 574
- US-A- 5 840 253
- PATENT ABSTRACTS OF JAPAN vol. 018, no. 233 (C-1195), 28 April 1994 (1994-04-28) & JP 06 023203 A (TOKYO RIKA KIKAI KK), 1 February 1994 (1994-02-01)

## Description

### Field of the Invention

This invention relates to an apparatus and method for evaporating liquids, particularly, but not exclusively for the purposes of either increasing the concentration of a solution and/or for the complete removal of a solvent from a solution to leave a dry solid.

### Background to the Invention

In practice an apparatus for this purpose is known which is generally referred to as a rotation evaporator. An apparatus of this kind is disclosed in patent US 2,797,747. The receptacle of this rotation evaporator, formed as a round bottomed distilling flask in borosilicate glass, is rotated about its axis by means of a motor during distillation and is connected via a rotary union to a condenser. A vacuum source, for example a diaphragm pump, is connected to the condenser. As a heating arrangement a so called heating bath is used, preferably having a liquid heat transfer medium that can be heated by means of an immersion heater.

While rotation evaporators of this type offer rapid evaporation and have therefore been widely adopted in Chemistry and Biology laboratories they have limitations. Rotation evaporators require significant expertise and constant adjustment to achieve rapid evaporation without bumping (evaporating in an explosive manner), spitting or foaming of the solution being concentrated.

Furthermore, the solution must be placed in a suitable receptacle for evaporation, typically a round bottom distillation flask; such a receptacle is impractical for future storage or transportation of concentrated or dry products. Often therefore, after the solution has been concentrated these dry products must be removed from the distilling flask and transferred to a more suitable receptacle, a vial with a screw cap for example. Commonly this transfer process is non trivial requiring multiple distillations and scraping of dry or semi-dry products from the distillation flask, thus requiring significant laboratory staffing time and resulting in loss of product and the potential for contamination.

Centrifugal evaporators are also known, such as that described in GB 2 384 724A. In such evaporators, sample tubes are mounted to a central rotor and spun about a central axis perpendicular to the axis of the sample tubes. The centrifugal forces acting on the solution in the tubes allows evaporation under vacuum without bumping. However, such evaporators are slow batch processes and as such are unsuitable for incorporation into the modern automated synthesis and purification processes. These modern processes are predominantly sequential and require integrating with evaporation processes providing rapid evaporation of a small number of samples as opposed to slow evaporation of a large number of samples as offered by centrifugal evaporators. By way of illustration, a typical application for evaporation might be the separation of 50 mg of solid from 30 ml of a solution of 50:50 (by volume) of water and Acetonitrile, for which the best centrifugal evaporators currently available would typically take about 16 hours to complete the evaporation and could dry 16 such samples in parallel. Centrifugal evaporators of this type are also relatively inconvenient to load/unload.

Another feature of centrifugal evaporators of this type is that they concentrate or dry the solutions in the receptacle in which the solution was presented to the system, and thus cannot concentrate a volume of solution that is larger than the vial of choice into that vial. Centrifugal evaporators of this type are further limited in that when solutions are dried into solids, the solids take the form of hard pellets in the bottom of the receptacle. It is not only difficult to evaporate the final molecules of solvent from these pellets but the pellets themselves are very difficult to redissolve.

An object of the invention is to further develop the apparatus and method of the kind described to provide an evaporation system capable of concentrating a solution that is contained in one receptacle, a round bottomed flask for example, into a receptacle of a form more suitable for storage and transportation, a screw cap vial for example. It is also an object of this invention to provide an apparatus and method that accomplishes the above objective in a manner so that it is easier and requires less laboratory staff and/or time to complete the concentration process.

US 3,871,574 discloses a method and apparatus for concentrating thermolabile fluids, particularly biological fluids, which tend to become denatured and to foam when heated to boiling temperatures. In performing the method, a thermo-labile liquid having a volatile component is confined in a container so that when the container and its contents are centrifuged, a substantial liquid-gas interface will be formed. During centrifugation, the pressure within the container is reduced to cause rapid volatilization of the volatile component at a temperature well below the denaturization temperature of the liquid. Centrifugation is performed at a speed sufficient to substantially eliminate foaming of the liquid during such volatilization. Moderate heating of the container and its contents to promote such volatilization may be provided. The centrifuging, gasevacuating, and heating steps are all performed simultaneously and are continued until the concentration of the liquid has been increased a predetermined extent.

US 2,512, 604 discloses an evaporator in which the substance to be evaporated is subjected to heat and/or vacuum and rotating the receptacle about its vertical axis so as to spread the liquid to be evaporated in a uniformly thin layer over the inner wall of the receptacle. The receptacle is placed within a vacuum chamber and rotated whilst being subjected to RF energy,

DE 4319498 A1 discloses a rotary evaporator comprising a vessel having an orifice in its upper region, a holder for the vessel on which it is held, a stand having a rotary mount in which the holder is mounted so as to be able to rotate about an axis of rotation deviating from the vertical, a rotary drive for the holder, an outlet line for removing vapour from the vessel and a heating apparatus for heating a substance to be evaporated present in the vessel, the heating apparatus is a microwave heating apparatus having a heating chamber which is accessible through a door, the holder extending from the outside to the inside through the well of the heating chamber into this, and the rotary drive being arranged outside the heating chamber.

DE 19841556 C1 discloses an evaporation apparatus for liquid sample material, the apparatus comprising a jar-shaped holder for a sample container, having an integral drive device for rotating the sample container inside the holder, and a heating device for warming the holder to a temperature which is above room temperature. A tightly closing lid is placed on the holder with an integral heating device which warms the lid to a temperature higher than room temperature. A suction device creates a partial vacuum in the space enclosed by the holder and lid. A gas supply system admits gas into the space to abstract sample vapour. It is a further object of this invention to provide an apparatus and method that reduces or eliminates the disadvantages of the prior art evaporators discussed above.

### Summary of the Invention

Therefore at its most general, the present invention provides an apparatus and method for concentrating and/or drying solutions in a receptacle which involves evaporation under low pressures whilst the receptacle is being rotated at high speed in a substantially vertical orientation.

The high speed rotation allows the surface area of the solution in the receptacle to be maximised whilst using a standard sized/shaped receptacle, and is preferably also sufficient to prevent bumping. The vertical orientation of the receptacle also contributes to maximising the surface area, whilst allowing easy exchange of receptacles.

According to a first aspect of the present invention there is provided an apparatus for concentrating solutions in a vaporising receptacle, according to claim 1.

Preferably the apparatus also includes means for dispensing a solution to be concentrated into the vaporising receptacle.

Preferably the apparatus also includes sensing means to measure the temperature of the solution within the vaporising receptacle.

The hot air heater means may also include a diverter for controlling the direction of the hot air flow and in one position directing said flow away from the receptacle.

Preferably the apparatus also includes a control and regulating unit for controlling or regulating at least one of said rotation means, said vacuum pump, said dispensing means, said sensing means and said heating means.

Preferably the vaporising receptacle is rotated (and the rotation means is operable to rotate the receptacle) at a speed sufficient to prevent the solution from bumping when heat is applied to the contents at a pressure below atmospheric conditions.

More preferably the rotation means is operable to rotate the vaporising receptacle to speeds at which centrifugal force flattens the solution against the side walls of the receptacle.

Preferably the rotation means is operable to rotate the vaporising receptacle at speeds of 2000 rpm or higher, and more preferably the rotation means is operable to rotate the vaporising receptacle at speeds of 3250 rpm or higher, and ideally at speeds of 6000 rpm or higher.

Preferably the apparatus further comprises a removable vaporising receptacle. Conveniently the removable vaporising receptacle is a standard clear glass vial of substantially cylindrical shape. Preferably the vial has one closed end, the other end having an axially located aperture (mouth) of a diameter smaller than that of the cylinder. For example, the receptacle may be a 20ml scintillation vial.

Thus the apparatus of the present invention can be used with standard vials, and there is no need to transfer the concentrated solution or the dried solute from the receptacle to a further receptacle for transport or storage.

Preferably the mouth, through which the solution be concentrated is dispensed, remains positionally stationary whilst the receptacle is rotated (albeit rotating). This can be achieved by arranging the apparatus and the receptacle such that the rotational axis passes through the mouth of the receptacle, Thus the sealing means of the apparatus may also remain positionally stationary, facilitating introduction and removal of the receptacle to/from the apparatus.

Advantageously, the vaporising receptacle has features to enable a closure to be fixed to the open end. Such features may include a threaded portion or a return feature to enable the application of a crimp type closure.

Preferably the temperature sensing means is a non-contact temperature sensor, and in particular the non-contact temperature sensing means may be a device known as an infra red pyrometer, which may be arranged to sense the temperature of the solution or dry products through the walls of the vaporising receptacle.

Using a non-contact temperature sensor allows the receptacle to be rotated at high speeds without also having to consider the rotation of, or constraints on rotation resulting from, a contacting temperature sensor.

For precise measurements using an infra red pyrometer it may be preferable to turn off the heating means for a period prior to accepting temperature measurements.

Alternatively, a device to measure the temperature of the vapour directly may be located in the vapour flow immediately 'down stream' of the rotating vacuum connection or the vaporising chamber if this embodiment is adopted. Assuming that vapour is flowing, measuring the temperature of the vapour gives a good approximation to the temperature of the solution that the vapour is evaporating from.

The heating means is a hot air blower employed to direct hot air onto the outside of the vaporising receptacle.

Preferably, during the evaporation process, the vaporising receptacle is sealed by pressing the open aperture against a seal that is itself connected to a rotating vacuum connection. This rotating vacuum connection facilitates the connection to the vacuum pump.

Alternatively, the vial may be contained within a sealed vaporising chamber with a connection between this vaporising chamber and the vacuum pump.

The apparatus may further comprise means for engaging and disengaging a vaporising receptacle with the apparatus. This means for engaging and disengaging may be manually or automatically operated. This means may also provide for simple or automated replacement of the receptacle with a further (e.g. empty) receptacle.

To further enhance the degree of automation of the dispensing operation a level sensing means may be employed to detect the level of the solution within the vaporising receptacle.

Preferably the level sensing means is used to detect the level of the solution only when the vaporising receptacle is substantially stationary.

The level sensing means may be a non-contacting optical device.

Alternatively, the level sensing means may be a contact sensing device employing the know principle of measuring changes in conductivity to detect the surface of the solution.

To enable the evaporator to collect the discharged solvent it is advantageous to connect a condenser to the exhaust of the vacuum pump in a manner known per se.

Thus the solvent can be re-used as appropriate, and the emission of the apparatus controlled.

To maximise the evaporation, performance, particularly when concentrating solutions that contain solvents having high boiling points, it is advantageous to connect a condenser in the conduit between said vaporising chamber or rotary vacuum connection and said vacuum pump.

Preferably there are two condensers, a first condenser being located between the vaporising receptacle and the vacuum pump and a second condenser being connected to the exhaust of the vacuum pump.

The control unit may be employed to ensure that the condition of at least one, and preferably all, of the following parameters within the vaporising receptacle is acceptable prior to dispensing a quantity of the solution: pressure, temperature and rotational speed.

Additionally, the control unit may be employed to ensure the rotational speed of the vaporising receptacle is acceptable prior to reducing, to a level below atmospheric conditions, the pressure in the vaporising receptacle. Thus the control unit may prevent bumping by ensuring that a sufficient rotational speed is reached before low pressure evaporation commences.

To facilitate a greater degree of automation, a pressure sensing means may be inserted into the conduit between said vaporising chamber, or rotary vacuum connection, and said vacuum pump. The electrical signal from this sensing means is connected to the control and regulating unit.

To further enhance the degree of automation, a solenoid actuated valve may be placed into the conduit between said vaporising chamber or rotary vacuum connection and said vacuum pump to provide a means of controlling the pressure in said receptacle.

Preferably the valve employed before the vacuum pump is of the two port two position, normally closed type.

To still further enhance the degree of automation, a second solenoid actuated valve may be placed into a further conduit, said further conduit being connected into the first conduit at a location between said vaporising chamber or rotary vacuum connection and said vacuum pump. This second solenoid actuated valve may allow a rapid change of the pressure within the vaporising receptacle to atmospheric conditions.

Preferably the valve employed in said further conduit is of the two port two position, normally open type.

In embodiments of the invention, the apparatus may further comprise a sample loop in which the solution to be concentrated is buffered for dispensing into the vaporising receptacle.

The control unit may be appropriately configured to control the flow of solution into and out of the sample loop.

The apparatus may further comprising a solution pump arranged to pump the solution to be concentrated into the vaporising receptacle, and in such cases, the control unit may operate the solution pump to pump the solution to be concentrated into the vaporising receptacle substantially continuously whilst the vaporising receptacle is being rotated.

The means for dispensing the solution may include a nozzle.

Preferably the nozzle and the solution pump are chosen such that the solution is dispensed into the vaporising receptacle in a continuous jet.

Preferably the nozzle and the solution pump are chosen such that there is a pressure difference across the nozzle of at least 1 bar.

The control unit may be appropriately configured to control the dispensing (and in particular the rate of dispensing) of the solution into the receptacle whilst rotation and evaporation are occurring. The control unit may also be configured to detect when the capacity of the receptacle for concentrated solution or dry solute is reached and interrupt the continuous dispensing. Optionally the control unit may be further configured to automatically replace the receptacle when the capacity is reached and recommence the continuous evaporation process.

A further aspect of the present invention provides an apparatus for producing concentrated solutions or dry solvate including a first apparatus according to the first aspect above (which may have any combination of the preferred and optional features of the above aspect) and a second apparatus for performing a precursor process which supplies a solution to be concentrated to said first apparatus.

The precursor process may be any one of: high performance liquid chromatography, purification of organic compounds by flash chromatography, purification of organic compounds by preparative scale supercritical fluid chromatography or synthesis of organic compounds using continuous flow techniques.

Heating of the rotating vacuum connection (or the vaporising chamber, if this embodiment is adopted), may be required when evaporating some solvents to prevent condensation.

Where it is necessary to limit the maximum temperature of the concentrated sample then the heating means may be such that its heat output is controlled by the magnitude of an electrical current, and current controlling means is provided adapted to control the said electric current to the heating means, and the signal from the temperature sensing means is employed to control the current controlling means and thereby the heat output from the heating means and in turn the temperature to which the concentrated sample is permitted to rise.

Preferably, the dispensing means is comprised of a conduit to feed the solution from the feed receptacle, a valve to regulate the flow of solution and a further conduit to feed the solution into the vaporising receptacle.

Preferably the valve employed in the dispensing means is of the two port two position normally closed type.

Alternatively, the dispensing means may be comprised of a conduit to feed the solution from the feed receptacle, a volumetric pump to feed a measured quantity of solution, a valve to seal the pump and conduit from the vaporising receptacle and a further conduit to feed the solution into the vaporising receptacle.

A further alternative, the dispensing means may be comprised of a pipette and syringe pump arrangement in a manner known per se. To facilitate this arrangement, the vaporising receptacle may be moved either manually or by automated means to a position clear of the rotating vacuum connection giving the pipette access to dispense a measured quantity of solution into the receptacle.

Where the volume of solution to be concentrated is greater than the capacity of a single vaporizing receptacle the dispensing means can be used in conjunction with the apparatus to complete a series of automated dispense and concentrate cycles. By this process a total volume of solution many times greater than the volume of the vaporising receptacle can be concentrated into a single vaporising receptacle. For example the contents of a 250 ml round bottom flask may be either concentrated or dried completely into a single 20 ml scintillation vial.

In a development of the above aspects, the receptacle may be supported to rotate about an axis that is at an angle to the longitudinal axis of the vaporising receptacle itself. In this configuration the aperture is arranged to run true while the closed end is arranged to rotate in an eccentric matter. An advantage of this arrangement is that the solids dried from solution are deposited predominately at a location close to the closed end of the vaporising receptacle. Preferably the angle between the rotational axis and the longitudinal axis of the vaporising receptacle is between 0 and 6 degrees.

A further aspect of the present invention provides a method of concentrating a solution according to claim 28.

Preferably the step of maintaining the temperature of said vaporising receptacle within a predetermined range continues until a portion of the solvent has evaporated.

Preferably the vaporising receptacle is rotated at a speed sufficient to prevent the solution from bumping when heat is applied to the contents at a pressure below atmospheric conditions.

Preferably the vaporising receptacle is rotated at speeds sufficient for centrifugal force to flatten the solution against the side walls of the receptacle.

Preferably the vaporising receptacle is rotated at speeds of 2000 rpm or higher, more preferably at speeds of 3250 rpm or higher, and ideally at speeds of 6000 rpm or higher.

The step of maintaining the temperature may further include controlling a diverter mechanism which allows the air flow from the hot-air heater to be directed onto or away from the vaporising receptacle.

The step of rotating the receptacle at high speed may be commenced before or after the solution has been dispensed into said receptacle.

The step of maintaining the temperature of receptacle may include sensing the temperature of the receptacle with a non-contact temperature sensor.

The receptacle used preferably has a mouth at one end through which the solution is dispensed into the receptacle and evaporated solvent is withdrawn from the receptacle, the rotation of the receptacle being such that said aperture remains substantially positionally stationary when the receptacle is rotated. This can be achieved by having the rotational axis pass through the mouth.

In embodiments of the present aspect, the receptacle is substantially rotationally symmetric about a longitudinal axis, and the rotational axis is titled relative to that longitudinal axis. If these axes are tilted relative to each other, the angle of tilt is preferably between 0 and 6 degrees.

In a development of the present aspect, the step of dispensing is performed substantially continuously throughout the concentration process.

in this development, the method may further comprise the step of controlling either the rate at which the solution is dispensed into the vaporising receptacle, or the rate at which solvent is evaporated in said receptacle, such that a uniform film of solution is maintained over the side walls of the receptacle.

In one arrangement the step of controlling includes sensing the temperature of two different portions of the receptacle, a first of said portions being an area of the receptacle proximate to the impact area of a heat source maintaining the temperature of the receptacle, and a second of said portions being an area of the receptacle which is distant from the impact area of said heat source, and adjusting either of said rates according to the rate of change in the difference between the two sensed temperatures.

Alternatively or additionally in this development, the method may further comprise the step of controlling the pressure in the receptacle to prevent phase change from liquid to solid as the solution is dispensed.

Preferably in this development the dispensed solution is supplied under pressure, more preferably at a pressure of at least 4×10⁵ N/m² (4 bar).

Preferably in this development the solution is dispensed into the vaporising receptacle through a nozzle, and more preferably the nozzle and flow rate are selected and/or controlled such that there is a pressure difference of at least 1 bar across said nozzle.

In another development of this aspect, the method further includes the step of storing the solution to be concentrated in a sample loop prior to dispensing said solution into said receptacle,

In either of the above developments said solution may be provided to said receptacle or said sample loop directly from a preceding process.

Said preceding process may be one of: high performance liquid chromatography; purification of organic compounds by flash chromatography; purification of organic compounds by preparative scale supercritical fluid chromatography; or synthesis of organic compounds by continuous flow techniques.

The method of the present aspect is preferably performed using an apparatus according to any one of the preceding aspects, and the method may include further optional or preferred features which correspond to any combination of the optional or preferred features of the preceding aspects,

### Brief Description of the Drawings

Examples of solvent evaporators in accordance with the invention are now described with reference to the accompanying drawings in which:
Figure 1 shows the features of a removable vaporising receptacle.
Figure 2 shows a schematic, not to scale, sectional view of a first arrangement incorporating a rotating vacuum connection.
Figure 3 shows a detailed sectional view of the rotating vacuum connection of Figure 2.
Figure 4 shows a schematic, not to scale, sectional view of a second arrangement incorporating a vaporising chamber in place of the rotating vacuum connection.
Figure 5 is a detailed sectional view showing the location for the vaporising receptacle with respect to its axis of rotation.
Figure 6 shows a control schematic.
Figure 7 shows a detailed sectional view of a heating apparatus as used in embodiments of the invention.
Figure 8 shows a schematic, not to scale, sectional view of a first embodiment of the invention in which the solution is fed to the evaporator via a sample loop.
Figure 8B shows a schematic view of the valve of Figure 8 in the "load" position.
Figure 9 shows a schematic, not to scale, sectional view of a second embodiment of the invention in which the solution is fed to the evaporator from a pumped source.
Figure 10 shows a detailed sectional view of part of third embodiment of the invention.

### Detailed Description

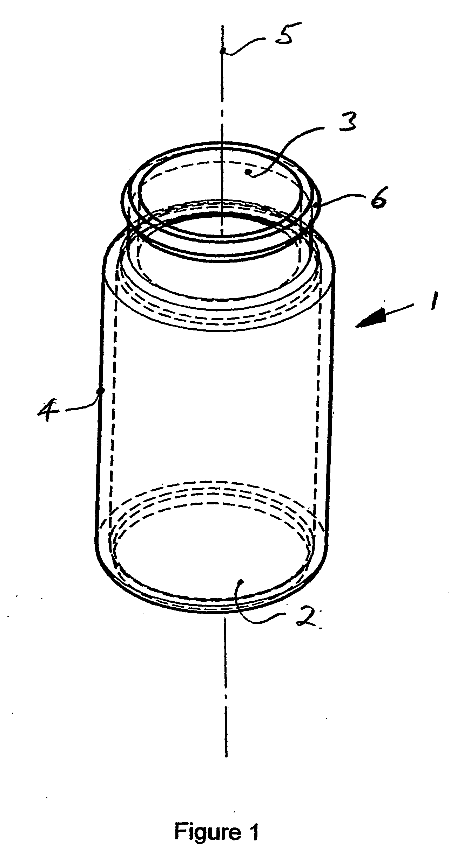

With reference to figure 1, a vaporising receptacle 1 has a substantially cylindrical portion 4 the axis of this cylindrical portion is labelled 5. The receptacle is closed at the lower end 2. An aperture 3 in the upper end is concentric with the cylindrical portion 4, having a diameter smaller than the internal diameter of the cylindrical portion 4. A feature 6 is provided for fixing a closure by, for example, manual operation, to the receptacle once the evaporation process is complete. The vaporising receptacle is manufactured from an impervious inert material so that it will not contaminate the sample or suffer corrosion; the material also allows transmission of infrared radiation. A suitable vaporising receptacle is readily available, being a 20 ml scintillation vial manufactured from borosilicate glass material,

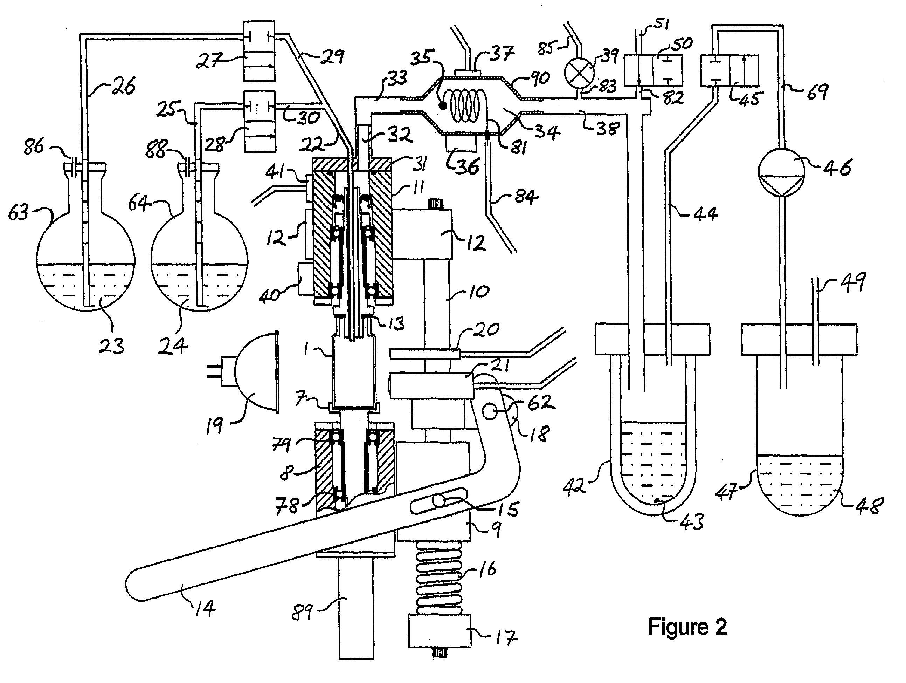

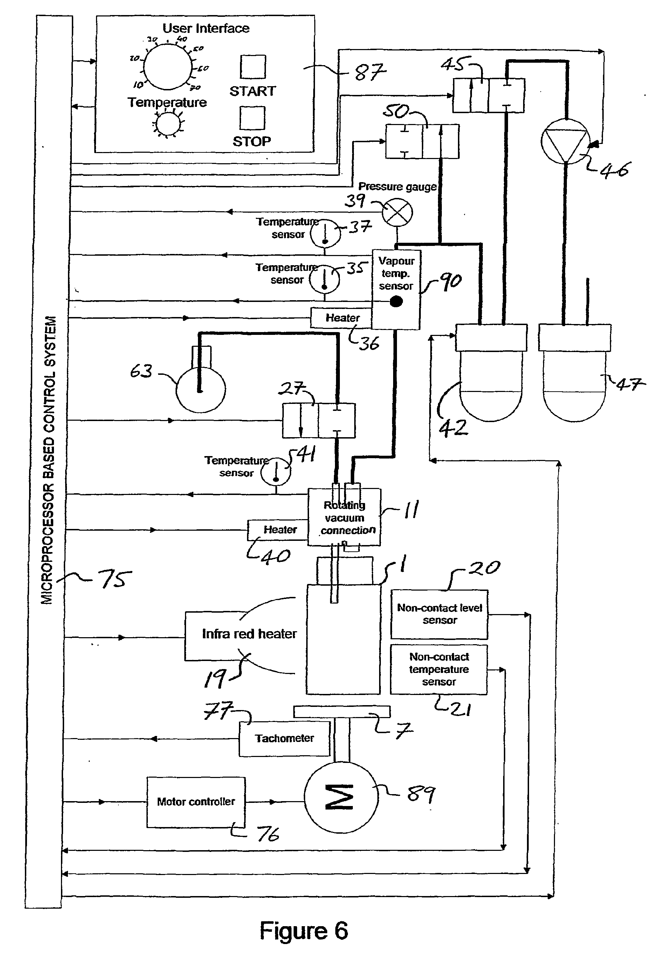

Referring to figures 2 and 6, in the arrangement shown in figure 2, the vaporising receptacle 1 is supported on the end of a shaft 7, which is mounted for rotation about its axis in bearings 78 and 79, drive for which is provided by an electric motor 89. The bearings 78 and 79 and motor 89 are connected to housing 8 which is rigidly connected to carriage 9, which is mounted using a pair of linear stiding bearings (not shown) to slide along a pair of shafts indicated by 10. Rigidly attached to the lower end of shaft 10 is a block 17. At least one compression spring is constrained to slide along shaft 10, being constrained between block 17 and carriage 9, thereby capable of exerting an upwards force onto carriage 9 resisting downward movement. A user operable leaver 14 is pivotally mounted onto block 18 by pin 62, a further pin 15 is rigidly mounted into carriage 9 and is constrained to run within a slot in lever 14. Block 18 is rigidly mounted to shafts 10. By the constraints described, a downward movement of lever 14 will produce a downward movement of carriage 9 and thereby, receptacle 1 relative to the fixed shafts 10.

When no force is applied to lever 14, by the action of spring 16 the upper portion of bottle 1 is forced into contact with the elastomeric seal 13, The sealing material is an impervious inert material so that it will not contaminate the sample or suffer degradation when exposed to solvents, a perfluorinated elastomer is suitable, and examples of brand names are Isolast^{™} and Kalrez^{™}. Seal 13 is constrained by the rotating vacuum connection against vertical or lateral movement but is allowed to rotate freely about the vertical axis.

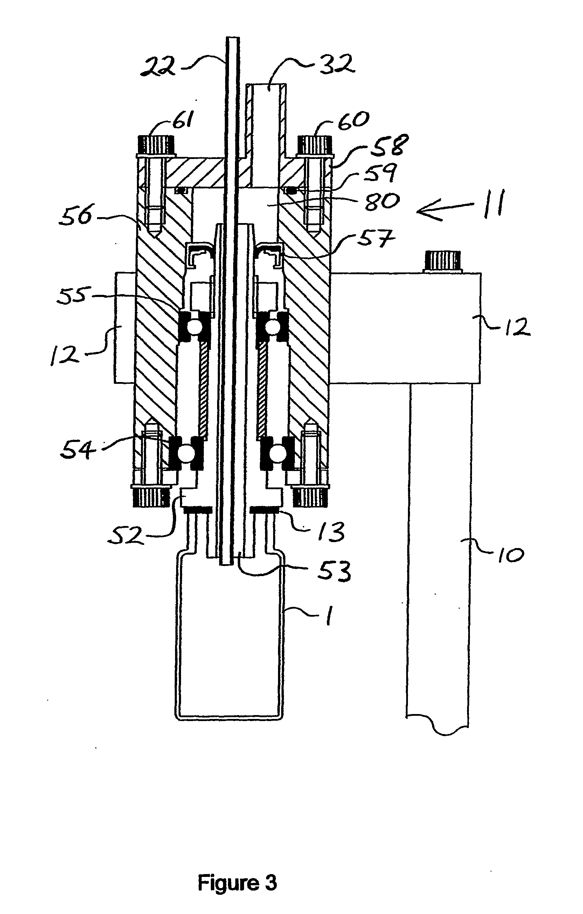

Referring to figure 3 showing a detailed sectional view of the rotating vacuum connection, seal 13 is located into a groove in shaft 52, which is mounted for rotation in bearings 54 and 55. A port 53 is provided running through the entire length of shaft 52 connecting the internal volume of vaporising receptacle 1 to the chamber 80 within the housing 58. The bearings 54 and 55 are mounted within housing 56 which is rigidly mounted to block 12, which is rigidly mounted to the upper portions of shafts 10. A sealing cap 58 is clamped to the top of body 56 by screws 60 and 61, an elastomeric seal 59 prevents leakage of air through the joint between cap 58 and body 56 into chamber 80. A shaft seal 57 is rigidly mounted within housing 56 to prevent leakage of air into chamber 80 between the housing 56 and the shaft 52. The sealing material is an impervious inert material so that it will not contaminate the sample or suffer degradation when exposed to solvents, a polytetraflouroethylene (PTFE) based seal material is suitable, a brand name is Turcon™

Referring now to figures 1, 2,3 and 6, a tube 22, welded into cap 58 passes completely through the port 53 projecting below the lower end of shaft 52 into the internal volume of the vaporising receptacle 1. A resistive heating device 40 and a temperature sensing device 41 are connected by a means providing good thermal contact to the outer surface of the rotary vacuum connection 11, for the purpose of heating the rotary vacuum connection 11 to a temperature determined by the control system 75. The port 32 in cap 58 is connected via conduits 33, 38, 44 and 69 to a vacuum pump 46, provided for the purpose of reducing the pressure within the vaporising receptacle causing the solvents contained within to boil at a maximum temperature that will not cause degradation to components contained within the solution, as such components are often thermo-labile. Typically for development of pharmaceutical drug compounds this upper temperature limit would be 37 degrees Celsius. The conduits 29 and 30 connected to tube 22 are in turn connected to isolating valves 27 and 28, each valve is connected a single solution supply vessel, valve 27 connected to solution supply vessel 63 by conduit 26 and valve 28 connected to solution supply vessel 64 by conduit 25.

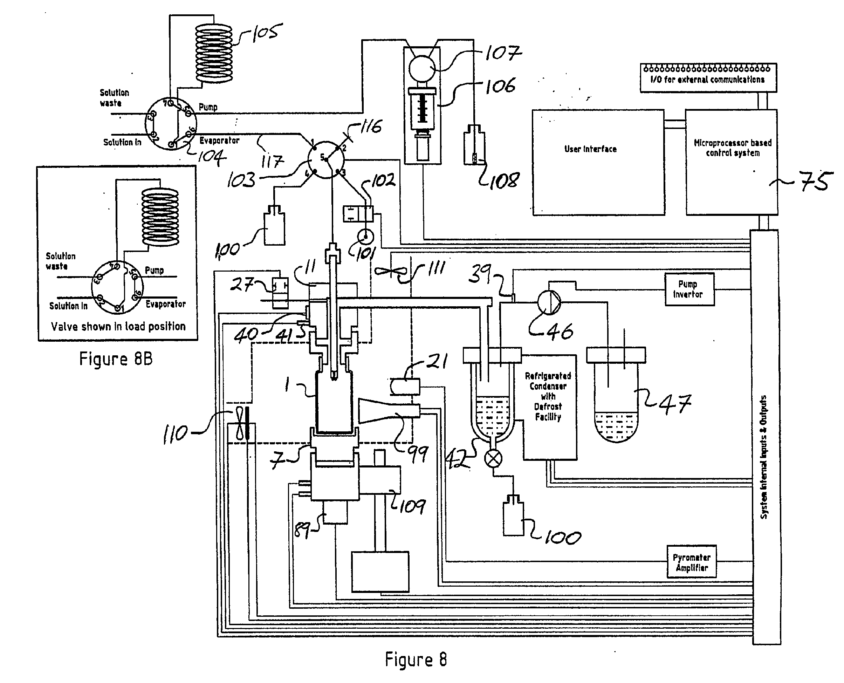

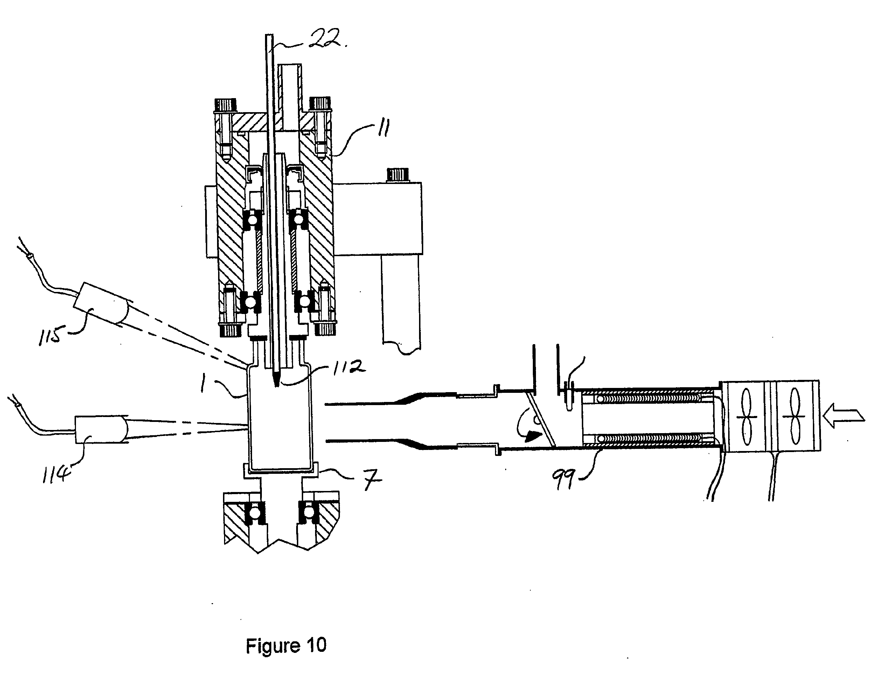

In the apparatus of Figure 1, a source of infra red radiation 19 is arranged to focus infra red radiation through the cylindrical portion 4 of the vaporising receptacle 1 for absorption by the solution within the chamber 1. However, in the present invention a hot air heater such as that illustrated in Figures 8 and 10 is provided instead of the infra red source 19. A suitable source of infra red radiation is a tungsten halogen lamp with gold plated parabolic reflector. Additional reflectors, not shown, are arranged to reflect transmitted radiation back into the solution and away from the shaft 7, housing 8, seal 13, shaft 52 and housing 11. At a location, at an angle to the direct path of the infra red radiation, an infra red pyrometer 21 is arranged to measure the temperature of the solution within the vaporising receptacle 1. At a further location, not in direct path of the infra red radiation, an optical liquid sensing device 20 is arranged to detect when the level of the solution within the vaporising receptacle 1, when vaporising receptacle 1 is stationary, is at or above the level at which the optical sensing device is set to monitor. The level at which the optical sensing device is set to monitor can be adjusted by the user of the apparatus by a slider with pinch screw means, not shown.

Connected between conduit 33 and conduit 38 is a vapour temperature sensing device 34. Attached to the sealed housing 90 is a resistive heating device 36 and a temperature sensing device 37 connected by a means providing good thermal contact to the outer surface of housing 90, for the purpose of heating the housing 90 to a temperature determined by the control system 75. A temperature sensing device 35, a thermocouple, is thermally but not electrically connected to a heat transfer device 81 which is mounted within the vapour flow and exchanges heat, by conduction, with the vapour. By this means the temperature sensing device 35 gives an electrical signal proportional to the temperature of the vapour within the housing 90. The temperature sensing device is protected from the solvent vapours present within the housing 90 by means of a polytetraflouroethylene (PTFE) sheath, not shown. Signal wires 84 connecting the temperature sensing device with the control system 75, pass through the housing 90 through a leak-free connector means.

Connected into conduit 38 via conduit 83 is a pressure sensing device 39 for generating an electrical signal proportional to the pressure within the conduit 38. The pressure sensing device 39 is connected to the control system 75 by connection lines 85.

Connected into conduit 38 via conduit 82 is a shut off valve 50, used for venting air at atmospheric conditions drawn through conduit 51 into conduit 38. To ensure failsafe operation of the apparatus, valve 50 is of the two port two position, normally open variety.

A condenser 42, chilled by means of external power source may be incorporated into the apparatus between conduits 38 and 44. The purpose of the condenser 42 it to condense a proportion of solvent vapour, reducing the volume flow rate of vapour that must be pumped from the system by the vacuum pump 46. To promote condensation of the vapour within the condenser, the temperature of the condenser 42 is maintained at a temperature below the temperature of the solution evaporating within the vaporising receptacle 1, this is achieved by feeding a mixture of chilled water and ethylene glycol through the jacket surrounding the condensed solvent 43 by a device known as a chiller, not shown.

Between conduit 44 and conduit 69 a shut off valve 45 may be advantageously incorporated for isolating the vacuum pump 46 from the apparatus providing the means to control the pressure within the apparatus to a pre-determined level. To ensure failsafe operation of the apparatus, valve 45 is of the two port two position, normally closed variety.

The solvent resistant vacuum pump 46 is connected into conduit 69, the exhaust from the pump is connected into condenser 47. The purpose of the condenser 47 is to trap the solvent exhausted by the vacuum pump 46, reducing the potential for atmospheric pollution or explosive ignition of the exhaust vapours. Gases and some vapour exhausted from the condenser 47 pass through conduit 49 for connection into a fume cupboard or similar means, not shown.

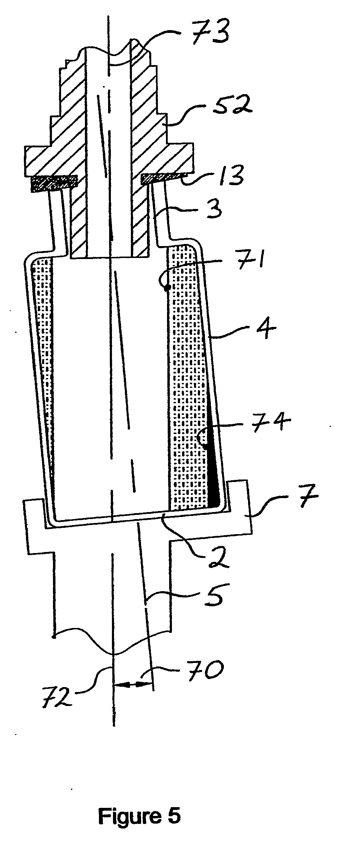

Figure 5 shows an embodiment in which the vaporising receptacle is inclined with respect to the axis of rotation. The axis 72 is the axis of rotation for shaft 7,the axis 73 is the axis of rotation for shaft 52, and the axis 5, as previously described, is the axis of the cylindrical portion of the vaporising receptacle 1. The axis 73 rotates substantially concentrically relative to axis 72, with an angle 70 between axis 72 and axis 5. The surface 71 of the solution is the position of the surface when the shaft 7 is rotating at the desired operational speed and before the volume of the solution has been reduced significantly by evaporation. The surface 74 is the position of the surface when the shaft 7 is rotating at the desired operational speed and when all the solvent has evaporated from the solution leaving a dry residue. The position and shape of the dry residue can be modified significantly by changing the angle 70. Best results are achieved when the angle 70 is between zero and six degrees, yet it is possible for the apparatus to function at angles between zero and 45 degrees.

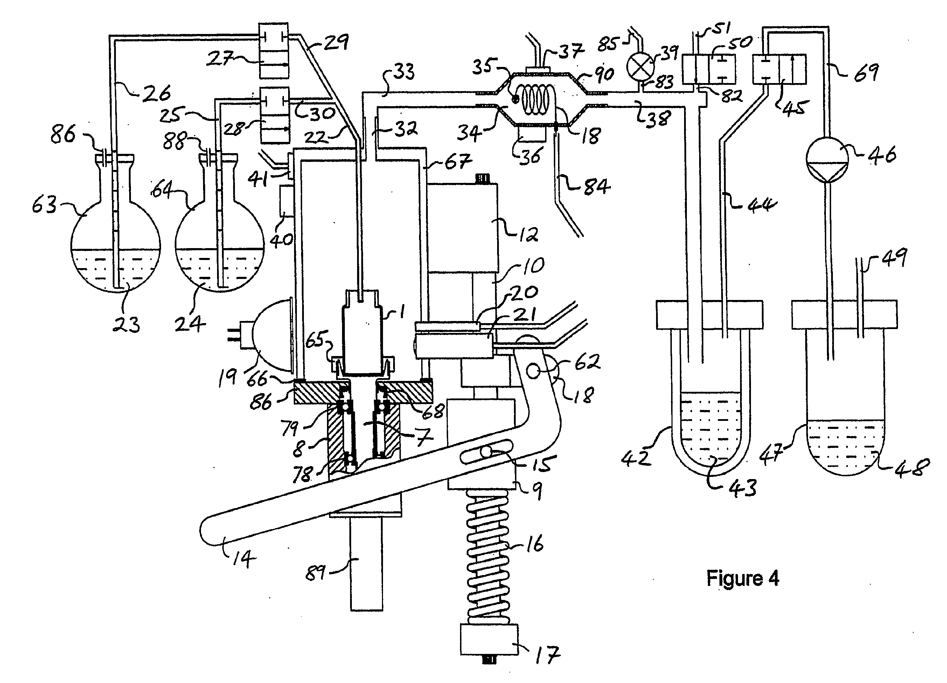

Referring to figure 4, an alternative arrangement which does not form part of the present invention is described featuring a vaporising chamber 67 in place of the rotary vacuum connection 11. The vaporising chamber 67 differs from the rotary vacuum connection 11 in that the vaporising chamber 67 does not rotate, when the lever 14 is released, the seal 66 is clamped between the vaporising chamber 67 and the base plate 86, a shaft seal 68 is now incorporated between the base plate 86 and the shaft 7 and the vaporising receptacle is located and retained in a collet 65 attached to the upper end of shaft 7. The walls of the vaporising chamber are manufactured from an impervious inert material so that it will not contaminate the sample or suffer corrosion; the material also allows transmission of infrared radiation. Suitable materials are borosilicate glass or quartz. Aside from the structural differences described, operation of this apparatus incorporating the vaporising chamber is identical to that for the embodiment which incorporates the rotating vacuum connection as described by figure 2.

The operation of the apparatus will now be described by reference to figures 2 and 6. A similar method of operation applies to the apparatus of figure 4 and many of the steps and features are shared with the methods of operation of later embodiments.

At the start of the evaporation process, the valve 50 is in the open position venting, to atmosphere, conduit 38 and the internal volume connected to it, valve 45 is in the closed position disconnecting the vacuum pump from conduit 44 and the internal volume connected to it, and the vacuum pump 46 is powered and evacuating the conduit 69, isolating valves 27 and 28 are in the closed position disconnecting the solution supply vessels from the conduit 22, the motor 89 and shaft 7 are stationary, and the infra red lamp 19 is de-energised. The maximum acceptable temperature for the solution is selected using the user interface 87, this data is transmitted to the control system 75, the rotating vacuum connection 11 is heated to the maximum allowable solution temperature by the action of heater 40 and controlled/detected by temperature sensor 41. The housing 90 is also heated to the maximum allowable solution temperature by the action of heater 36 and temperature sensor 37. One or more solution supply vessels are placed at locations indicated by 63 and 64. The lever 14 is moved in a downward direction and an empty vaporising receptacle 1 is placed onto the shaft 7. The lever 14 is then eased in an upward direction under the action of spring 16 and the vaporising receptacle 1 is forced against the seal 13 thus connecting, without leakage, the vaporising receptacle 1 to the rotating vacuum connection 11.

The apparatus is now ready to commence the remainder of the evaporation processes in an automated manner, the start-button is activated on the user interface 87, and this data is transmitted to the control system 75, stage A is initiated.

In stage A, the valve 45 is energised, connecting the vacuum pump and conduit 69 to conduit 44, the pressure is reduced throughout the connected conduits, and also within the vaporising receptacle 1. Valve 50 remains open, and thus air at atmospheric conditions flows through conduit 51 into conduit 38, in this manner the pressure within the vaporising receptacle 1 is regulated, being governed by the flow restriction inherent in the geometry of conduit 51. A pressure of approximately 10⁴ N/m² (100 mbar) below the atmospheric conditions is suitable. With the pressure within the vaporising receptacle 1 at a pressure below atmospheric, the magnitude of the pressure is confirmed by pressure sensor 39, the temperature of the vaporising receptacle 1 is measured using the infra red pyrometer 21, if both pressure and temperature are within acceptable limits, stage B is initiated.

In stage B, valve 28 is opened, the pressure difference between the port 22 and the solution 24 causes the solution 24 to be forced through valve 28, conduit 30 and conduit 22 into the vaporising receptacle 1. When the level sensor 20 detects the required level of solution in the vaporising receptacle 1, valve 28 is closed, stage C is initiated. If the required level is not achieved then it is assumed that vessel 64 is empty, in this case, valve 28 is closed and valve 27 is opened, the process continues. If the required level is not achieved when valve 27 is open then it is assumed that all solution supply vessels are empty, and stage E is initiated.

In stage C, the motor controller 76 ramps the motor up to full speed, the tachometer sensor feeds the motor speed back to the control system 75, and when full motor speed is achieved, valve 50 is closed and the pressure in the vaporising receptacle reduces rapidly. The minimum operational rotational speed for shaft 7 is defined as that speed sufficient to prevent the solution from bumping and foaming when heat is applied to the contents at a pressure at or below the saturated vapour pressure of the solution within the vaporising receptacle 1. It has been found, by experiment, that a speed in excess of that necessary to subject the solution to an acceleration of 150 times the normal gravitational attraction is required. For example, if the vaporising receptacle 1 is a 20 ml scintillation vial then a minimum speed of 3250 RPM is required, if the vessel is a 4 ml HPLC vial a speed of 6000 RPM is required. The temperature of the vapour, determined by sensor 35, is monitored continuously, a control algorithm within the control system 75 uses the vapour temperature data from sensor 35 to control the average power supplied to the hot air heater 99 to maintain the vapour temperature as measured by sensor 35 to a target value which is slightly lower than the maximum acceptable temperature as set using the user interface 87. Once the target value of vapour temperature is achieved together with the average power supplied to the hot air heater 99 having decreased below a predetermined lower threshold level, the control system 75 assumes the majority of the solvent has evaporated from the solution, and stage D is initiated.

In stage D, the valve 45 is moved to a closed position disconnecting the vacuum pump from conduit 44 and the internal volume connected to it, the valve 50 is moved to an open position venting, to atmosphere, conduit 38 and the internal volume connected to it. Once the pressure in conduit 38, measured by pressure sensing device 39 has increased to a level above a predefined minimum value, the speed of motor 89 is ramped down to stop. When a motor stationary condition is measured by the tachometer 77, stage B is initiated once again. Stages B to D inclusive are repeated until all the solution contained within the solution supply vessels 63 and 64 has been transferred to the vaporising receptacle 1 and evaporated.

In stage E, the motor controller 76 ramps the motor 89 up to operational speed, the tacho sensor feeds motor speed back to the control system 75, when the minimum operational rotational speed for shaft 7 is achieved, valve 50 is closed and the pressure in the vaporising receptacle reduces rapidly. The temperature of the contents within the vaporising receptacle 1, determined by the non-contact temperature sensor 21, is monitored continuously, and a further control algorithm within the control system 75 uses the temperature data from sensor 21 to control the average power supplied to the hot air heater 99 to maintain the temperature as measured by sensor 21 to a target value which is slightly lower than the maximum acceptable temperature as set using the user interface 87. Prior to taking each temperature measurement with the non-contact temperature sensor 21, the control system 75 ensures that the hot air heater 99 has been off for a pre-determined period of time. Once the average power supplied to the hot air heater 99 has decreased below a predetermined lower threshold level, the temperature as measured by the non-contact temperature sensor 21 is maintained at the maximum acceptable temperature, and the control system 75 starts a timer for the final drying period. Once the final drying period has been completed, the control system assumes that the product contained within the vaporising receptacle is dry, and stage F is initiated. In stage F, the valve 45 is moved to a closed position disconnecting the vacuum pump from conduit 44 and the internal volume connected to it, the valve 50 is moved to an open position venting, to atmosphere, conduit 38 and the internal volume connected to it. Once the pressure in conduit 38, measured by pressure sensing device 39 has increased to a level above a predefined minimum value, the speed of motor 21 is ramped down to stop. When the motor stationary condition is measured by the tachometer 77, the evaporation process is complete, the control system 75 indicates this via a lamp on the user interface 87.

The empty solution supply vessels 63 and 64 are removed, the lever 14 is moved in a downward direction and the vaporising receptacle 1 containing the concentrated solution is removed from shaft 7, if necessary, the pump is turned off and the trapped solvent is removed from the two condensers 42 and 47 for disposal.

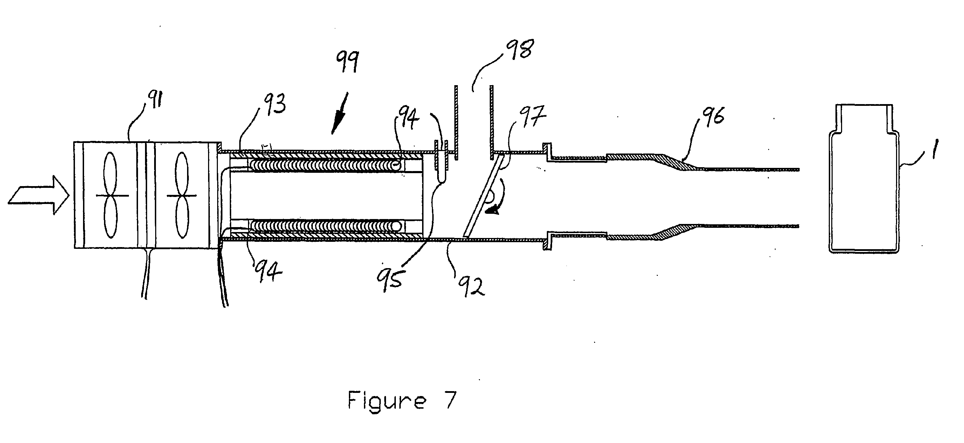

Figure 7 shows an alternative apparatus and method for heating the contents of the vaporising receptacle 1 in accordance with embodiments of the present invention, using a hot air heater 99 instead of infra-red lamp 19.

A two stage axial fan 91 draws air at room temperature and forces the air past the resistive heating elements 94. A suitable fan is manufactured by Sanyo Denki and provides airflow 0.4 m³/min at a static pressure of 300 Pa. The heating element is mounted inside a thin walled tube 92 of low thermal conductivity. Stainless steel and titanium are both suitable materials for this tube. The heating element is electrically and thermally isolated from the thin walled tube 92 by a sleeve 93 of insulating material. A suitable material for this sleeve is Filamic tube FT19 supplied by Langtec Mica Ltd. A temperature sensing device 95, such as a thermister, positioned in the airflow as it exits the heating element, is used to measure the temperature of the air.

A butterfly valve 97 is positioned between the vaporising receptacle 1 and the temperature sensor 95, and can be actuated to one of two positions, either to allow the hot air to heat the vaporising receptacle 1 or to divert the hot air out of the system through exit tube 98. The butterfly valve 97 is actuated by a solenoid, not shown, although alternatively a pneumatic cylinder could be used to actuate the butterfly valve 97. Preferably the butterfly valve 97 is sprung to return the valve to the divert position where air is diverted through tube 98. Between the butterfly valve and the vaporising receptacle 1, the air passes through a nozzle 96. This nozzle 96 can be easily removed and replaced and the size of the nozzle 96 can be chosen to suit the size of the vaporising receptacle 1.

At the start of the evaporation process the fan 91 is powered, the heating element 94 is disconnected from the electrical supply and the butterfly valve is in the divert position. The vaporising receptacle 1 is rotated and the vacuum pump 46 is used to reduce the pressure in the vaporising receptacle sufficiently to cause the solvent within the vaporising receptacle 1 to boil, as described in more detail in other embodiments. The evaporation of the solvent within the vaporising receptacle 1 results in a rapid reduction of temperature of the vaporising receptacle, which is measured by the non-contact temperature sensor (e.g. an infra-red pyrometer) 21. In response to this reduction in temperature, the butterfly valve is activated allowing air to flow from the fan 91 to the vaporising receptacle 1. At the same time a control loop is enabled in which the heater power is adjusted to achieve and maintain a target temperature of the vaporising receptacle 1 as measured by the non-contact temperature sensor 21. The control loop utilises proportional, integral and derivative terms (commonly known as PID control) to ensure both rapid response and accurate temperature control. This control is maintained until the sample is dry.

If at any time during the process the temperature of the vaporising receptacle 1 exceeds the target temperature by a pre-set value then the power to the heater 94 is immediately switched off and at the same time the butterfly valve 97 is returned to the divert position. The pre-set value would typically be 3° C above the target temperature. It is most likely that the target temperature will be exceeded by the pre-set value once most of the solvent has evaporated and the demand for heat is dramatically reduced. The butterfly valve 97 is maintained in the divert position until the air temperature, as measured by the sensor 95, has reduced to a value lower that the target temperature. Once this condition is achieved, the butterfly valve is activated allowing air to flow from the fan 91 to the vaporising receptacle 1 and the control loop between the temperature sensor 21 and the heater 94 is re-enabled. Figure 8 shows an apparatus according to a first embodiment of the invention. The apparatus of Figure 8 is similar to that shown in Figure 2 and corresponding items are given the same references.

The apparatus of Figure 8 has the following differences from that of Figure 2. The vacuum pump 46 is driven using a variable speed drive which enables control of the pressure within the vaporising receptacle 1 without the valve 45. No vapour temperature sensor 90 is used. The vaporising receptacle 1 is supported on the end of shaft 7 which is in turn supported by a motorised lifting mechanism 108, At the uppermost end of tube 22 is connected a 5 port rotary valve 103, This valve 103 allows the volume within the vaporising receptacle 1 to be connected to either: a nitrogen supply 101 via a two port normally closed valve 102; to a blanked off port 116; to a further valve 104; or to connect the valve 104 directly to the waste container 100.

The six port rotary valve 104 is known within the industry as an injection valve, Connected to one port of the rotary valve 104 is a syringe pump 106, with a further 3 port distribution valve 107. A sample loop 105 of sufficient capacity to accommodate the whole of the solution containing the sample of interest is connected across two of the ports in a manner commonly used within the industry. The solution to be evaporated is supplied from a preceding process to the port labelled '2' of the valve 104,

Examples of preceding processes which may be used with the present embodiment include: purification of organic compounds by preparative scale High Performance Liquid Chromatography (HPLC); purification of organic compounds by Flash Chromatography; purification of organic compounds by preparative scale supercritical fluid chromatography (SFC); synthesis of organic compounds by continuous flow techniques.

At the start of the evaporation process the motorised lifting mechanism 109 is in the fully lowered position, a clean vial is located onto the shaft 7, the rotatable shaft 7 is stationary, the tube 22 and the tube connecting valve 104 to 103 have been cleaned with pure solvent, valve 103 is positioned to connect tube 22 to the blanked off port 116 (position '2'), valve 102 is in the closed position, and valve 104 is switched to the load position (shown in Figure 8B). Thus the process is operating such that solution is flowing continually through the sample loop. The process indicates when solution to be evaporated is present within the sample loop, and also indicates the volume of this solution.

Next, the valve 104 is switched to the 'inject' position (as shown in Figure 8 itself), in which the sample loop 105 is connected between the syringe pump 106 and the selection valve 103. The motorised lifting mechanism 109 is powered, lifting the vial until it engages with the elastomeric seal 13, and the drive motor 89 is energised to rotate the vial at high speed (in the range 3,250 to 10,000 rpm). When the required speed has been achieved the valve 103 is positioned to connect the valve 104 directly to tube 22, and the syringe pump 106 is driven to pump pure solvent from receptacle 108 through the sample loop 105 and into the vaporising receptacle 1, carrying the solution present within the sample loop 105 into the vaporising receptacle 1.

When either all the solution in the sample loop 105 has been dispensed into the vaporising receptacle 1, or the capacity of the vaporising receptacle 1 has been reached, then the pump 106 is stopped, the valve 103 is switched to connect tube 22 to the nitrogen supply, the valve 102 is switched on for a short duration to eject the solution remaining within tube 22 into the vaporising receptacle 1. The valve 103 is then moved to connect tube 22 to the blanked port 116.

The evaporation process is then initiated: the vent valve 27 is closed, the vacuum pump 46 is powered to gradually reduce the pressure in the vaporising receptacle 1, the control loop is initiated to heat the contents of the vial in response to the feedback from the non-contact sensor 21. When all the solvent has evaporated (which can be determined, for example, by monitoring the power required to maintain the temperature of the vaporising receptacle 1), then if all the solution within the sample loop 105 has been dispensed into the vaporising receptacle 1 the process can continue for a period of a few minutes to completely dry the compound, and otherwise valve 27 is opened to return the pressure within the vaporising receptacle 1 to atmospheric and a further dispense and evaporate cycle can be initiated.

When the last of the solution to be evaporated within the sample loop 105 has been dispensed then a cleaning cycle is initiated. This cleaning cycle is as follows: with the vaporising receptacle 1 maintained at vacuum, if required, the valve 103 is switched to connect the sample loop 105 to the waste container 100, the syringe pump 106 is used to pump a volume of pure solvent from the container 108 through the sample loop 105 and into waste container 100. Typically, the volume of pure solvent would be 4 times the volume of the sample loop 105 to ensure adequate cleaning. The valve 104 is returned to the load position, the sample loop is then available to accept the next sample. The pump 106 is stopped, the vacuum pump stopped, and the valve 27 opened. When the pressure within the vaporising receptacle 1 has returned to atmospheric, the valve 103 is switched to connect tube 117 to tube 22, the syringe pump 106 is used to pump pure solvent through pipe 22 into the vaporising receptacle 1. 4 times the volume of tube 22 only is required. The syringe pump 106 is stopped, the valve 103 is switched to connect tube 22 to valve 102, valve 102 is open for a short duration to clear tube 22 of remaining solvent. Valve 102 is closed, valve 103 returned to connect tube 22 to port 116. The solvent in the vaporising receptacle 1 is then evaporated and dried fully in the manner already described above. Once the compound is fully dried the volume within the vaporising receptacle 1 is returned to atmospheric pressure, the spin motor 89 is turned off and the lift 109 returns the vaporising receptacle 1 to the load position.

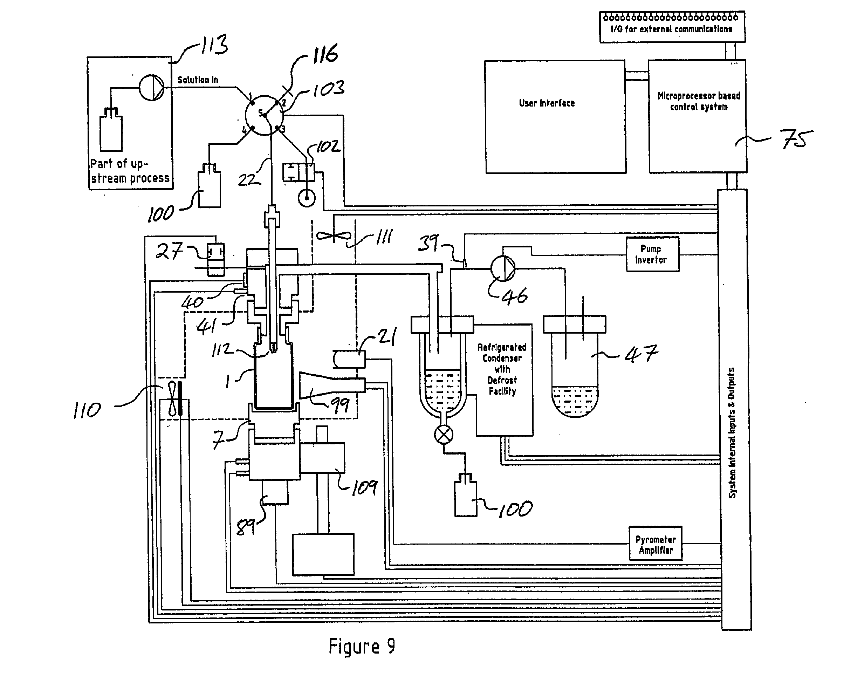

Figure 9 shows an apparatus according to a further embodiment of the invention. The apparatus of Figure 9 is similar to that shown in Figure 8 but the valve 104, the sample loop 105 and the syringe pump 106 have been replaced by an upstream process, generically indicated as 113. This process 113 supplies a solution to be evaporated from a continuously pumped source. The flow rate of solution from process 113 is chosen to be within the capability of the evaporator and it is therefore possible to evaporate the solution continuously, subject of course to the capacity limitations of the vaporising receptacle.

The continuous evaporation in this embodiment means that solution is dispensed substantially continuously (and preferably continuously) into the vaporising receptacle 1 at the same time and at approximately the same rate at which solution is evaporating from the vaporising receptacle 1. Thus the vaporising receptacle 1 must be maintained at pressures significantly below atmospheric while the solution is being pumped into the vaporising receptacle. To enable this without either drawing solution from the up-stream process, or causing the solution to "bump" (evaporate in an explosive manner) as it enters the vaporising receptacle 1, a nozzle 112 is located at the point where solution within the tube 22 enters the vaporising receptacle 1. The up-stream process must supply solution under pressure. Typically a minimum working pressure of 4×10⁵ N/m² (4 bar) is preferable.

Two criteria influence the design of the nozzle: 1) The size of the nozzle is selected to match the flow-rate in order to create a pressure difference across the nozzle greater than 10⁵ N/m² (1 bar); and 2) The shape of the nozzle is selected to ensure the solution exits the nozzle as a jet not a series of drips. An example of a nozzle suitable for flow rates between 0.5 ml/minute and 2 ml/minute is 0.075 mm in diameter by 15 mm in length. A suitable material for the nozzle is fused silica tube such as that supplied by Upchurch Scientific Corp.

Examples of preceding processes include: purification of organic compounds by preparative scale High Performance Liquid Chromatography (HPLC); purification of organic compounds by Flash Chromatography; purification of organic compounds by preparative scale supercritical fluid chromatography (SFC); synthesis of organic compounds by continuous flow techniques.

At the start of the evaporation process the motorised lifting mechanism 109 is in the fully lowered position, a clean vial 1 is located onto the shaft 7, the rotatable shaft 7 is stationary, the tube 22 has been cleaned with pure solvent, valve 103 is positioned to connect tube 22 to the blanked off port indicated by '2', and the valve 102 is in the closed position. The up-stream process 113 indicates, for example by providing a signal to the control means, when it is about to start delivering solution. The motorised lifting mechanism 109 is powered, lifting the vial until it engages with the elastomeric seal 13, and the drive motor 89 is energised to rotate the vial at a high speed (in the range 3,250 to 10,000 rpm). When the required speed has been achieved the valve 103 is positioned to connect the tube 22 to the up-stream process 113. Once solution is exiting the nozzle 112 into the vaporising receptacle 1 in a jet the evaporation process is initiated.

The vent valve 27 is closed, the pump is powered to gradually reduce the pressure in the vaporising receptacle 1, the control loop is initiated to heat the contents of the vial in response to the feedback from the non-contact sensor 21. While the solution is being dispensed, the pressure is precisely controlled to a pre-set minimum value, this minimum value depending on the characteristics of the solution being evaporated. Pressure control is advantageous as it may prevent phase change from liquid to solid as the solution exits the nozzle. Phase change can be caused either by freezing of the solution (e.g. in the case of water if the pressure is reduced below 6 mbar) or by precipitation of solids from solution as a volatile constituent 'flashes off'.

During this phase of the process it is also desired to maintain a uniform film of solution over the entire cylindrical surface of the vial. If this film is not maintained then temperature control of the compound as it dries may be compromised.

Two methods for maintaining the film of solution have been developed. The first is a manual process whereby the rate of evaporation is adjusted by experiment to be a few percent slower than the rate of delivery. This process has been found to be effective where the total size of the sample is not more than 8 times the maximum capacity of the vial, but beyond this is generally not practical.

The second method is an automated process and will be described in relation to the arrangement shown in Figure 10. This method is suitable for a sample of any volume.

Figure 10 shows a detail of an apparatus that enables an automated method for maintaining a continuous film of solution while evaporating solutions from a continuously pumped source. The arrangement is generally as shown in and as described in relation to Figure 9 but the single non-contact temperature sensor 21 is replaced by two non-contact temperature sensors 114 and 115. Preferably these sensors have a very small viewing area; an example of a suitable sensor is an infrared sensor supplied by Raytek Corp. (part number DKUMID02LT) having a 2.4 mm diameter viewing area at 80 mm distance. Sensor 114 is positioned to view an area of the vial close to the height at which the hot air heater 99 is applying heat to the surface of the vial. The second senor 115 is positioned to view an area at the upper end of the cylindrical portion of the vaporising receptacle 1. The viewing area for sensor 115 is away from the area of the vaporising receptacle 1 being heated by the hot air heater 99.

If there is a continuous film present on the cylindrical surface of the vial then during evaporation, sensor 115 measures a temperature close to the temperature of the boiling solvent within the vial while sensor 114 measures the temperature of the heated surface of the vial. As an example, when evaporating a volatile solvent, sensor 115 may be measuring -5° C while sensor 114 is measuring 20° C. If the film of solvent is allowed to reduce in thickness, e.g. due to the rate of evaporation being greater than the rate of delivery, then as the thickness of the solvent film reduces then the temperature measured by sensor 115 increases until it approaches the temperature measured by sensor 114. Using the data from these two sensors it is possible to use the rate of change in the difference between the temperatures measured by sensors 114 and 115 to make corrections in either the rate of evaporation or in the rate of delivery of the solution into the vaporising receptacle 1.

Thus in operation, the evaporation continues until the up-stream process indicates (e.g. by providing a signal to the control means) that delivery is complete. The valve 103 is then switched to connect the up-stream process directly to waste container 100 and simultaneously connect tube 22 to valve 102. Valve 102 is then opened for a short duration to clear the residual solution from tube 22 into vaporising receptacle. The up-stream process 113 stops dispensing. Valve 102 is closed and valve 103 is switched to connect tube 22 to the blanked off port 116. The evaporation process then continues until all solvent has been evaporated but at this stage pressure control is not critical. Once all the solvent has been evaporated and the compound in the vaporising receptacle 1 has been dried the process is stopped as previously described.

Using the embodiment illustrated in Figure 9 with the illustrative example discussed in relation to the prior art (the separation of 50 mg of solid from 30 ml of a solution of 50:50 (by volume) of water and Acetonitrile), this apparatus takes approximately 20 minutes start to finish for each 30 ml sample, compared to a typical period of about 16 hours to dry 16 such samples in parallel using the best centrifugal evaporators currently available. Furthermore, whilst the centrifugal evaporators of the prior art would produce 16 separate dry samples, the apparatus of the present invention can allow the samples to be consecutively or continuously dried in the same (or a smaller overall number of) vials.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. An apparatus for concentrating solutions in a vaporising receptacle (1), said receptacle having a mouth (3) for the removal of vapour, the apparatus comprising:
support means (7) for supporting the vaporising receptacle with the mouth (3) of the receptacle (1) facing upwards;
rotation means (89) being operable to rotate the vaporising receptacle (1) thus supported at high speed about a substantially vertical rotation axis (72);
a vacuum pump (46) to reduce the pressure within the vaporising receptacle (1); and
means (13) for sealing the mouth of the vaporising receptacle (1) to the apparatus to communicably connect the vacuum pump (46) to the interior of the vaporising receptacle and to maintain the reduced pressure;
**characterised in that** the apparatus further comprises:
a hot air blower (19, 99) arranged to direct hot air flow onto the outside of the receptacle (1).

2. An apparatus according to claim 1 further including means (22) for dispensing a solution to be concentrated into the vaporising receptacle (1).

3. An apparatus according to claim 1 or claim 2 further including sensing means (21) to measure the temperature of the solution within the vaporising receptacle (1).

4. An apparatus according to claim 3 wherein the sensing means (21) is a non-contact temperature sensor.

5. An apparatus according to any one of the preceding claims wherein the heating means further includes a diverter for controlling the direction of the hot air flow and in one position directing said flow away from the receptacle.

6. An apparatus according to any one of the preceding claims, further including a control and regulating unit (75) for controlling or regulating at least one of said rotation means (89), said vacuum pump (46), said dispensing means, said sensing means (21) and said heating means (19, 99).

7. An apparatus according to any one of the preceding claims wherein the rotation means (89) is operable to rotate the vaporising receptacle (1) to speeds at which centrifugal force flattens the solution against the side walls of the receptacle.

8. An apparatus according to claim 7 wherein the rotation means (89) is operable to rotate the vaporising receptacle (1) at speeds of 2000 rpm or higher.

9. An apparatus according to claim 8 wherein the rotation means (89) is operable to rotate the vaporising receptacle (1) at speeds of 3250 rpm or higher.

10. An apparatus according to any one of the preceding claims further comprising a vaporising receptacle (1).

11. An apparatus according to claim 10 wherein the rotational axis passes through the mouth (3) of the vaporising receptacle (1).

12. An apparatus according to claim 11 wherein the vaporising receptacle (1) is substantially cylindrical.

13. An apparatus according to any one of claims 10 to 12 wherein the vaporising receptacle (1) is a standard vial.

14. An apparatus according to any one of the preceding claims further comprising means (8, 9, 10) for engaging and disengaging the vaporising receptacle (1) with the apparatus.

15. An apparatus according to any one of the preceding claims further comprising a level sensing means (20) to detect the level of solution in the vaporising receptacle (1) when the receptacle is not rotating.

16. An apparatus according to any one of the preceding claims further comprising a condenser (42, 47).

17. An apparatus according to claim 16 wherein there are two condensers, a first condenser (42) being located between the vaporising receptacle (1) and the vacuum pump (46) and a second condenser (47) being connected to the exhaust of the vacuum pump.

18. An apparatus according to any one of the preceding claims further comprising a sample loop (105) in which the solutions to be concentrated is buffered for dispensing into the vaporising receptacle (1).

19. An apparatus according to any one of the preceding claims further comprising a solution pump (106) arranged to pump the solution to be concentrated into the vaporising receptacle.

20. An apparatus according to claim 19 wherein the control unit operates the solution pump (106) to pump the solution to be concentrated into the vaporising receptacle (1) substantially continuously whilst the vaporising receptacle is being rotated.

21. An apparatus according to claim 20 wherein the means for dispensing the solution includes a nozzle (112).

22. An apparatus according to claim 21 wherein the nozzle (112) and the solution pump (108) are chosen such that the solution is dispensed into the vaporising receptacle in a continuous jet.

23. An apparatus according to claim 21 or claim 22 wherein the nozzle (112) and the solution pump (106) are chosen such that there is a pressure difference across the nozzle of at least 10⁵ N/m².

24. An apparatus according to any one of the preceding claims wherein the receptacle (1) has a longitudinal axis (70) about which it is rotationally symmetric and the means (7) for supporting and the means for rotating (89) are arranged such that the longitudinal axis of the receptacle is tilted away from the rotational axis (72).

25. An apparatus according to claim 24 wherein the tilt between the rotational axis (72) and the longitudinal axis (70) of the receptacle is between 0 and 6 degrees.

26. An apparatus for producing concentrated solutions or dry solvate including a first apparatus according to any one of the preceding claims and a second apparatus (113) adapted to perform a precursor process which supplies a solution to be concentrated to said first apparatus.

27. An apparatus according to claim 26 wherein the precursor process is any one of high performance liquid chromatography, purification of organic compounds by flash chromatography, purification of organic compounds by preparative scale supercritical fluid chromatography and synthesis of organic compounds using continuous flow techniques.

28. A method of concentrating a solution comprising the steps of:
dispensing said solution into a vaporising receptacle (1), the receptacle having a mouth (3) for the removal of vapour;
supporting said vaporising receptacle (1) with the mouth (3) facing upwards;
rotating the thus supported vaporising receptacle (1) at high speed about a substantially vertical rotational axis (72); and
reducing the pressure in said vaporising receptacle to evaporate at least a portion of the solvent, **characterised in that** the method further includes the steps of:
sealing the mouth (3) of the receptacle (1) to the apparatus to communicably connect the vacuum pump (46) to the interior of the vaporising receptacle and to maintain the reduced pressure; and
maintaining the temperature of said vaporising receptacle within a predetermined range by controlling a hot-air blower (19, 99) which is arranged to direct air flow onto the outside of the vaporising receptacle (1).

29. A method according to claim 28 wherein the step of maintaining the temperature further includes controlling a diverter mechanism (97) which allows the air flow from the hot-air heater (99) to be directed onto or away from the vaporising receptacle (1).

30. A method according to either of claims 28 or 29 wherein said vaporising receptacle (1) is rotated at a speed sufficient to cause centrifugal force to flatten the solution against the side walls of the receptacle.

31. A method according to claim 30 wherein said vaporising receptacle (1) is rotated at a speed of 2000 rpm or greater.

32. A method according to claim 31 wherein said vaporising receptacle (1) is rotated at a speed of 3250 rpm or greater.

33. A method according to any one of claims 28 to 32 wherein the step of rotating the receptacle (1) at high speed is commenced after the solution has been dispensed into said receptacle.

34. A method according to any one of claims 28 to 32 wherein the step of rotating the receptacle (1) at high speed is commenced before the solution is dispensed into said receptacle.

35. A method according to claim 34 wherein the step of dispensing is performed substantially continuously throughout the concentration process.

36. A method according to claim 35 further comprising the step of controlling either the rate at which the solution is dispensed into the vaporising receptacle, or the rate at which solvent is evaporated in said receptacle (1), such that a uniform film of solution is maintained over the side walls of the receptacle.

37. A method according to claim 36 wherein the step of controlling includes sensing the temperature of two different portions of the receptacle, a first of said portions being an area of the receptacle proximate to the impact area of a heat source maintaining the temperature of the receptacle, and a second of said portions being an area of the receptacle which is distant from the impact area of said heat source, and adjusting either of said rates according to the rate of change in the difference between the two sensed temperatures.

38. A method according to any one of claims 35 to 37 further comprising the step of controlling the pressure in the receptacle (1) to prevent phase change from liquid to solid as the solution is dispensed.

39. A method according to any one of claims 35 to 38 wherein the dispensed solution is supplied under pressure.

40. A method according to claim 39 wherein the dispensed solution is supplied at a pressure of at least 4 x 10⁶ N/m².

41. A method according to any one of claims 35 to 40 wherein the solution is dispensed into the vaporising receptacle (1) through a nozzle (112).

42. A method according to claim 41 wherein the nozzle (112) and flow rate are selected and/or controlled such that there is a pressure difference of at least 10⁶ N/m² across said nozzle.

43. A method according to any one of daims 28 to 42 further including the step of storing the solution to be concentrated in a sample loop (105) prior to dispensing said solution into said receptacle (1).

44. A method according to any one of claims 35 to 43 wherein said solution is provided to said receptacle (1) or said sample loop (105) directly from a preceding process (113).

45. A method according to claim 44 wherein said preceding process (113) is one of: high performance liquid chromatography; purification of organic compounds by flash chromatography; purification of organic compounds by preparative scale supercritical fluid chromatography; or synthesis of organic compounds by continuous flow techniques.

46. A method according to any one of claims 28 to 45 wherein the step of maintaining the temperature of receptacle (1) includes sensing the temperature of the receptacle with a non-contact temperature sensor (21).

47. A method according to any one of claims 28 to 46 wherein the receptacle (1) has a mouth (3) at one end through which the solution is dispensed into the receptacle and evaporated solvent is withdrawn from the receptacle, and the axis of rotation (72) passes through that mouth.

48. A method according to any one of claims 28 to 47 wherein the receptacle is substantially rotationally symmetric about a longitudinal axis (70), and that longitudinal axis is tilted away from the rotational axis (72).

49. A method according to claim 48 wherein the rotational axis (70) is tilted from the longitudinal axis (72) of the receptacle (1) by between 0 and 6 degrees.

## Patentansprüche

1. Vorrichtung zur Einengung von Lösungen in einem Verdampfungsbehälter (1), wobei der Behälter eine Öffnung (3) zur Entfernung des Dampfes aufweist, wobei die Vorrichtung Folgendes umfasst:
Trägermittel (7) zum Tragen des Verdampfungsbehälters, wobei die Öffnung (3) des Behälters (1 ) nach oben gerichtet ist;
ein Rotationsmittel (89), das betätigbar ist, um den solcherart getragenen Verdampfungsbehälter (1) bei hoher Geschwindigkeit um eine im Wesentlichen vertikale Rotationsachse (72) zu drehen;
eine Vakuumpumpe (46) zur Reduktion des Drucks in dem Verdampfungsbehälter (1); und
ein Mittel (13) zum Abdichten der Öffnung des Verdampfungsbehälters (1) gegenüber der Vorrichtung, um die Vakuumpumpe (46) kommunizierend mit dem Inneren des Verdampfungsbehälters zu verbinden und den reduzierten Druck aufrecht zu erhalten;
**dadurch gekennzeichnet, dass** die Vorrichtung ferner Folgendes umfasst:
ein Heißluftgebläse (19, 99), das angeordnet ist, um einen heißen Luftstrom auf das Äußere des Behälters (1) zu richten.

2. Vorrichtung nach Anspruch 1, die ferner ein Mittel (22) zur Abgabe einer einzuengenden Lösung in den Verdampfungsbehälter (1) umfasst.

3. Vorrichtung nach Anspruch 1 oder 2, die ferner ein Abfühlmittel (21) zur Messung der Temperatur der Lösung in dem Verdampfungsbehälter (1) umfasst.

4. Vorrichtung nach Anspruch 3, worin das Abfühlmittel (21) ein kontaktfreier Temperatursensor ist.

5. Vorrichtung nach einem der vorangegangenen Ansprüche, worin das Heizmittel ferner eine Leitvorrichtung umfasst, um die Richtung des heißen Luftstroms zu steuern und in einer Position den Strom von dem Behälter weg zu leiten.

6. Vorrichtung nach einem der vorangegangenen Ansprüche, die ferner eine Steuer- und Regulierungseinheit (75) zur Steuerung und Regulierung von zumindest einem aus Rotationsmittel (89), Vakuumpumpe (46), Abgabemittel, Abfühlmittel (21) und Heizmittel (19, 99) ausgewählten Element umfasst.

7. Vorrichtung nach einem der vorangegangenen Ansprüche, worin das Rotationsmittel (89) betätigbar ist, um den Verdampfungsbehälter (1) in Geschwindigkeiten zu drehen, bei denen die Zentrifugalkraft die Lösung an den Seitenwänden des Behälters glättet.

8. Vorrichtung nach Anspruch 7, worin das Rotationsmittel (89) betätigbar ist, um den Verdampfungsbehälter (1) bei Geschwindigkeiten von 2.000 U/min oder mehr zu drehen.

9. Vorrichtung nach Anspruch 8, worin das Rotationsmittel (89) betätigbar ist, um den Verdampfungsbehälter (1) bei Geschwindigkeiten von 3.250 U/min oder mehr zu drehen.

10. Vorrichtung nach einem der vorangegangenen Ansprüche, die ferner einen Verdampfungsbehälter (1) umfasst.

11. Vorrichtung nach Anspruch 10, worin die Rotationsachse durch die Öffnung (3) des Verdampfungsbehälters (1) hindurch verläuft.

12. Vorrichtung nach Anspruch 11, worin der Verdampfungsbehälter (1) im Wesentlichen zylinderförmig ist.

13. Vorrichtung nach einem der Ansprüche 10 bis 12, worin der Verdampfungsbehälter (1) eine herkömmliche Phiole ist.

14. Vorrichtung nach einem der vorangegangenen Ansprüche, die ferner Mittel (8, 9, 10) umfasst, um den Verdampfungsbehälter (1) mit der Vorrichtung in Eingriff zu bringen oder diesen Eingriff zu lösen.

15. Vorrichtung nach einem der vorangegangenen Ansprüche, die ferner ein Füllstandabfühlmittel (20) umfasst, um den Füllstand der Lösung in dem Verdampfungsbehälter (1) zu detektieren, wenn der Behälter nicht rotiert.

16. Vorrichtung nach einem der vorangegangenen Ansprüche, die ferner einen Kondensator (42, 47) umfasst.

17. Vorrichtung nach Anspruch 16, worin zwei Kondensatoren vorliegen, wobei ein erster Kondensator (42) zwischen dem Verdampfungsbehälter (1) und der Vakuumpumpe (46) angeordnet ist und ein zweiter Kondensator (47) mit der Ableitung der Vakuumpumpe verbunden ist.

18. Vorrichtung nach einem der vorangegangenen Ansprüche, die ferner eine Probenschleife (105) umfasst, in der die einzuengende Lösung gepuffert wird, um in den Verdampfungsbehälter (1) abgegeben zu werden.

19. Vorrichtung nach einem der vorangegangenen Ansprüche, die ferner eine Lösungspumpe (106) umfasst, die angeordnet ist, um die einzuengende Lösung in den Verdampfungsbehälter zu pumpen.

20. Vorrichtung nach Anspruch 19, worin die Steuereinheit die Lösungspumpe (106) betätigt, um die einzuengende Lösung im Wesentlichen kontinuierlich in den Verdampfungsbehälter (1) zu pumpen, während der Verdampfungsbehälter gedreht wird.

21. Vorrichtung nach Anspruch 20, worin das Mittel zur Abgabe der Lösung eine Düse (112) umfasst.

22. Vorrichtung nach Anspruch 21, worin die Düse (112) und die Lösungspumpe (106) so ausgewählt werden, dass die Lösung in einem kontinuierlichen Strahl in den Verdampfungsbehälter abgegeben wird.

23. Vorrichtung nach Anspruch 21 oder 22, worin die Düse (112) und die Lösungspumpe (106) so gewählt werden, dass in der Düse eine Druckdifferenz von zumindest 10⁵ N/m² vorliegt.

24. Vorrichtung nach einem der vorangegangenen Ansprüche, worin der Behälter (1) eine Längsachse (70) aufweist, um die er rotationssymmetrisch ist, und das Trägermittel (7) und das Rotationsmittel (89) so angeordnet sind, dass die Längsachse des Behälters von der Rotationsachse (72) weg geneigt ist.

25. Vorrichtung nach Anspruch 24, worin die Neigung zwischen der Rotationsachse (72) und der Längsachse (70) des Behälters zwischen 0 und 6 Grad beträgt.

26. Vorrichtung zur Herstellung von eingeengten Lösungen oder trockenem Solvat, einschließlich einer ersten Vorrichtung nach einem der vorangegangenen Ansprüche und einer zweiten Vorrichtung (113), die geeignet ist, um ein Vorläuferverfahren durchzuführen, und der ersten Vorrichtung eine einzuengende Lösung zuführt.

27. Vorrichtung nach Anspruch 26, worin das Vorläuferverfahren ein beliebiges von folgenden ist: eine Hochleistungsflüssigkeitschromatographie, die Reinigung organischer Verbindungen mittels Flash-Chromatographie, die Reinigung organischer Verbindungen mittels präparativer überkritischer Fluidchromatographie und die Synthese organischer Verbindungen unter Anwendung kontinuierlicher Verfahren.

28. Verfahren zur Einengung einer Lösung, das folgende Schritte umfasst:
die Abgabe der Lösung in einen Verdampfungsbehälter (1), wobei der Behälter eine Öffnung (3) zur Entfernung von Dampf aufweist;
das Tragen des Verdampfungsbehälters (1), wobei die Öffnung (3) nach oben gerichtet ist;
das Drehen des auf diese Weise getragenen Verdampfungsbehälters (1) bei hoher Geschwindigkeit um eine im Wesentlichen vertikale Rotationsachse (72); und
das Reduzieren des Drucks in dem Verdampfungsbehälter, um zumindest einen Teil des Lösungsmittels zu verdampfen, **dadurch gekennzeichnet, dass** das Verfahren ferner folgende Schritte umfasst:
das Abdichten der Öffnung (3) des Behälters (1) gegenüber der Vorrichtung, um die Vakuumpumpe (46) mit dem Inneren des Verdampfungsbehälters kommunizierend zu verbinden und den reduzierten Druck aufrecht zu erhalten; und
das Aufrechterhalten der Temperatur des Verdampfungsbehälters innerhalb eines vorbestimmbaren Bereichs durch die Steuerung des Heißluftgebläses (19, 99), das angeordnet ist, um einen Luftstrom auf das Äußere des Verdampfungsbehälters (1) zu richten.

29. Verfahren nach Anspruch 28, worin der Schritt des Aufrechterhaltens der Temperatur ferner die Steuerung eines Ablenkmechanismus (97) umfasst, der ermöglicht, dass der Heißluftstrom des Heißluftgebläses (99) auf den Verdampfungsbehälter (1) oder von diesem weg gerichtet wird.

30. Verfahren nach Anspruch 28 oder 29, worin der Verdampfungsbehälter (1) bei einer Geschwindigkeit gedreht wird, die ausreicht, damit die Zentrifugalkraft die Lösung an den Seitenwänden des Behälters glättet.

31. Verfahren nach Anspruch 30, worin der Verdampfungsbehälter (1) bei einer Geschwindigkeit von 2.000 U/min oder mehr gedreht wird.

32. Verfahren nach Anspruch 31, worin der Verdampfungsbehälter (1) bei einer Geschwindigkeit von 3.250 U/min oder mehr gedreht wird.

33. Verfahren nach einem der Ansprüche 28 bis 32, worin der Schritt des Drehens des Behälters (1) bei hoher Geschwindigkeit beginnt, nachdem die Lösung in den Behälter abgegeben wurde.

34. Verfahren nach einem der Ansprüche 28 bis 32, worin der Schritt des Drehens des Behälters (1) bei hoher Geschwindigkeit beginnt, bevor die Lösung in den Behälter abgegeben wird.

35. Verfahren nach Anspruch 34, worin der Schritt der Abgabe im Verlauf des Einengungsverfahrens im Wesentlichen kontinuierlich erfolgt.

36. Verfahren nach Anspruch 35, das ferner den Schritt des Steuerns der Rate, in der die Lösung in den Verdampfungsbehälter abgegeben wird, oder der Rate umfasst, in der das Lösungsmittel in dem Behälter (1) verdampft wird, sodass ein einheitlicher Film der Lösung auf den Seitenwänden des Behälters erhalten bleibt.

37. Verfahren nach Anspruch 36, worin der Schritt des Steuerns das Abfühlen der Temperatur von zwei verschiedenen Abschnitten des Behälters, wobei es sich bei einem ersten der Abschnitte um einen Bereich des Behälters nahe des Bereichs handelt, in dem die Wärmequelle wirkt und die Temperatur des Behälters aufrecht erhält, und der zweite der Abschnitte ein Bereich des Behälters ist, der von dem Bereich, in dem die Wärmequelle wirkt, entfernt ist, und die Anpassung einer der Raten gemäß der Rate der Veränderung der Differenz zwischen den beiden abgefühlten Temperaturen umfasst.

38. Verfahren nach einem der Ansprüche 35 bis 37, das ferner den Schritt des Steuerns des Drucks in dem Behälter (1) umfasst, um einen Übergang von flüssiger zu fester Phase während der Abgabe der Lösung zu verhindern.

39. Verfahren nach einem der Ansprüche 35 bis 38, worin die abgegebene Lösung unter Druck zugeführt wird.

40. Verfahren nach Anspruch 39, worin die abgegebene Lösung bei einem Druck von zumindest 4 x 10⁵ N/m² zugeführt wird.

41. Verfahren nach einem der Ansprüche 35 bis 40, worin die Lösung durch eine Düse (112) in den Verdampfungsbehälter (1) abgegeben wird.

42. Verfahren nach Anspruch 41, worin die Düse (11) und die Durchflussrate so ausgewählt und/oder gesteuert werden, dass über die Düse eine Druckdifferenz von zumindest 10⁵ N/m² vorliegt.

43. Verfahren nach einem der Ansprüche 28 bis 42, das vor der Abgabe der Lösung in den Behälter (1) ferner den Schritt des Lagerns der einzuengenden Lösung in einer Probenschleife (105) umfasst.

44. Verfahren nach einem der Ansprüche 35 bis 43, worin die Lösung dem Behälter (1) oder der Probenschleife (105) unmittelbar durch ein Vorläuferverfahren (113) bereitgestellt wird.

45. Verfahren nach Anspruch 44, worin das Vorläuferverfahren (113) eines von folgenden ist: eine Hochleistungsflüssigkeitschromatographie, die Reinigung organischer Verbindungen mittels Flash-Chromatographie, die Reinigung organischer Verbindungen mittels präparativer überkritischer Fluidchromatographie und die Synthese organischer Verbindungen unter Anwendung kontinuierlicher Verfahren.

46. Verfahren nach einem der Ansprüche 28 bis 45, worin der Schritt des Aufrechterhaltens der Temperatur des Behälters (1) das Abfühlen der Temperatur des Behälters mit einem kontaktfreien Temperatursensor (21) umfasst.

47. Verfahren nach einem der Ansprüche 28 bis 46, worin der Behälter (1) an einem Ende eine Öffnung (3) aufweist, durch die die Lösung in den Behälter abgegeben wird und verdampftes Lösungsmittel aus dem Behälter abgezogen wird, wobei die Rotationsachse (72) durch diese Öffnung hindurch verläuft.

48. Verfahren nach einem der Ansprüche 28 bis 47, worin der Behälter im Wesentlichen um eine Längsachse (70) rotationssymmetrisch ist und diese Längsachse von der Rotationsachse (72) weg geneigt ist.

49. Verfahren nach Anspruch 48, worin die Rotationsachse (70) von der Längsachse (72) des Behälters (1) in einem Winkel zwischen 0 und 6 Grad weg geneigt ist.

## Revendications

1. Appareil pour concentrer des solutions dans un récipient de vaporisation (1), ledit récipient ayant une embouchure (3) pour le retrait de la vapeur, l'appareil comprenant:
un moyen de support (7) pour supporter le récipient de vaporisation, l'embouchure (3) du récipient (1) étant orientée vers le haut;
un moyen de rotation (89) apte à faire tourner le récipient de vaporisation (1) ainsi supporté à vitesse élevée autour d'un axe de rotation sensiblement vertical (72);
une pompe de vide (46) pour réduire la pression dans le récipient de vaporisation (1); et
un moyen (13) pour rendre étanche l'embouchure du récipient de vaporisation (1) à l'appareil pour relier d'une manière communicable la pompe de vide (46) à l'intérieur du récipient de vaporisation et pour maintenir la pression réduite;
**caractérisé en ce que** l'appareil comprend en outre:
une soufflante d'air chaud (19, 99) agencée pour diriger l'écoulement d'air chaud vers l'extérieur du récipient (1).

2. Appareil selon la revendication 1, comportant en outre un moyen (22) pour distribuer une solution à concentrer dans le récipient de vaporisation (1).

3. Appareil selon la revendication 1 ou la revendication 2, comprenant en outre un moyen de détection (21) pour mesurer la température de la solution dans le récipient de vaporisation (1).

4. Appareil selon la revendication 3, dans lequel le moyen de détection (21) est un capteur de température non-contact.

5. Appareil selon l'une quelconque des revendications précédentes, dans lequel le moyen de chauffage comporte un dériveur pour commander la direction de l'écoulement d'air chaud et dans une position diriger ledit écoulement au loin du récipient.

6. Appareil selon l'une quelconque des revendications précédentes, comportant en outre une unité de commande et de régulation (75) pour commander ou réguler au moins un parmi ledit moyen de rotation (89), ladite pompe de vide (46), ledit moyen de distribution, ledit moyen de détection (21) et ledit moyen de chauffage (19, 99).

7. Appareil selon l'une quelconque des revendications précédentes, dans lequel le moyen de rotation (89) est apte à faire tourner le récipient de vaporisation (1) à des vitesses auxquelles la force centrifuge aplatit la solution contre les parois latérales du récipient.

8. Appareil selon la revendication 7, dans lequel le moyen de rotation (89) est apte à faire tourner le récipient de vaporisation (1) à des vitesses de 2000 tr/mn ou plus élevées.

9. Appareil selon la revendication 8, dans lequel le moyen de rotation (89) est apte à faire tourner le récipient de vaporisation (1) à des vitesses de 3250 tr/mn ou plus élevées.

10. Appareil selon l'une quelconque des revendications précédentes, comprenant en outre un récipient de vaporisation (1).

11. Appareil selon la revendication 10, dans lequel l'axe de rotation passe à travers l'embouchure (3) du récipient de vaporisation (1).

12. Appareil selon la revendication 11, dans lequel le récipient de vaporisation (1) est sensiblement cylindrique.

13. Appareil selon l'une quelconque des revendications 10 à 12, dans lequel le récipient de vaporisation (1) est un flacon standard.

14. Appareil selon l'une quelconque des revendications précédentes, comprenant en outre des moyens (8, 9, 10) pour la mise en et hors prise du récipient de vaporisation (1) avec l'appareil.

15. Appareil selon l'une quelconque des revendications précédentes, comprenant en outre un moyen de détection de niveau (20) pour détecter le niveau de la solution dans le récipient de vaporisation (1) lorsque le récipient ne tourne pas.

16. Appareil selon l'une quelconque des revendications précédentes, comprenant en outre un condenseur (42, 47).

17. Appareil selon la revendication 16, dans lequel il y a deux condenseurs, un premier condenseur (42) étant situé entre le récipient de vaporisation (1) et la pompe de vide (46), et un deuxième condenseur (47) étant relié à l'échappement de la pompe de vide.

18. Appareil selon l'une quelconque des revendications précédentes, comprenant en outre une boucle d'échantillon (105) dans laquelle la solution à concentrer est tamponnée pour la distribution dans le récipient de vaporisation (1).

19. Appareil selon l'une quelconque des revendications précédentes, comprenant en outre une pompe de solution (106) agencée pour pomper la solution à concentrer dans le récipient de vaporisation.

20. Appareil selon la revendication 19, dans lequel l'unité de commande fait fonctionner la pompe de solution (106) pour pomper la solution à concentrer dans le récipient de vaporisation (1) sensiblement continuellement pendant que le récipient de vaporisation tourne.

21. Appareil selon la revendication 20, dans lequel le moyen pour distribuer la solution comprend une buse (112).

22. Appareil selon la revendication 21, dans lequel la buse (112) et la pompe de solution (106) sont choisies de telle sorte que la solution est distribuée dans le récipient de vaporisation en jet continu.

23. Appareil selon la revendication 21 ou la revendication 22, dans lequel la buse (112) et la pompe de solution (106) sont choisies de telle sorte qu'il existe une différence de pression à la buse d'au moins 10⁵ N/m².

24. Appareil selon l'une quelconque des revendications précédentes, dans lequel le récipient (1) possède un axe longitudinal (70) autour duquel il est rotationnellement symétrique, et le moyen (7) de support et le moyen de rotation (89) sont agencés de façon que l'axe longitudinal du récipient soit basculé au loin de l'axe de rotation (72).

25. Appareil selon la revendication 24, dans lequel le basculement entre l'axe de rotation (72) et l'axe longitudinal (70) du récipient est entre 0 et 6°.

26. Appareil pour produire des solutions concentrées ou un solvate sec incluant un premier appareil selon l'une quelconque des revendications précédentes, et un deuxième appareil (113) apte à exécuter un processus de précurseur qui fournit une solution à concentrer audit premier appareil.

27. Appareil selon la revendication 26, dans lequel le processus de précurseur est l'un quelconque parmi une chromatographie liquide de haute performance, la purification de composés organiques par chromatographie flash, la purification de composés organiques par chromatographie avec fluide supercritique à l'échelle préparative et la synthèse de composés organiques en utilisant des techniques d'écoulement continu.

28. Procédé pour concentrer une solution comprenant les étapes de:
distribuer ladite solution dans un récipient de vaporisation (1), le récipient ayant une embouchure (3) pour le retrait de la vapeur;
supporter ledit récipient de vaporisation (1), l'embouchure (3) étant orientée vers le haut;
faire tourner le récipient de vaporisation ainsi supporté (1) à vitesse élevée autour d'un axe de rotation sensiblement vertical (72); et
réduire la pression dans ledit récipient de vaporisation pour faire évaporer au moins une partie du solvant, **caractérisé en ce que** le procédé comprend en outre les étapes de:
sceller l'embouchure (3) du récipient (1) à l'appareil pour relier de manière communicable la pompe de vide (46) à l'intérieur du récipient de vaporisation et pour maintenir la pression réduite; et
maintenir la température dudit récipient de vaporisation dans une plage prédéterminée en commandant une soufflante d'air chaud (19, 99) qui est agencée pour diriger l'écoulement d'air vers l'extérieur du récipient de vaporisation (1).

29. Procédé selon la revendication 28, dans lequel l'étape du maintien de la température comprend en outre la commande d'un mécanisme de dérivation (97) qui permet que l'écoulement d'air de l'organe de chauffage d'air chaud (99) soit dirigé vers ou au loin du récipient de vaporisation (1).

30. Procédé selon l'une quelconque des revendications 28 ou 29, dans lequel ledit récipient de vaporisation (1) est amené à tourner à une vitesse suffisante pour amener la force centrifuge à aplatir la solution contre les parois latérales du récipient.

31. Procédé selon la revendication 30, dans lequel ledit récipient de vaporisation (1) est amené à tourner à une vitesse de 2000 tr/min ou plus grande.

32. Procédé selon la revendication 31, dans lequel ledit récipient de vaporisation (1) est amené à tourner à une vitesse de 3250 tr/mn ou plus grande.

33. Procédé selon l'une quelconque des revendications 28 à 32, dans lequel l'étape de rotation du récipient (1) à vitesse élevée est commencée après que la solution a été distribuée dans ledit récipient.

34. Procédé selon l'une quelconque des revendications 28 à 32, dans lequel l'étape de rotation du récipient (1) à vitesse élevée est commencée avant que la solution ne soit distribuée dans ledit récipient.

35. Procédé selon la revendication 34, dans lequel l'étape de distribution est exécutée sensiblement continuellement durant le processus de concentration.

36. Procédé selon la revendication 35, comprenant en outre l'étape consistant à commander soit la vitesse à laquelle la solution est distribuée dans le récipient de vaporisation, soit la vitesse à laquelle le solvant est amené à s'évaporer dans ledit récipient (1) de sorte qu'un film de solution uniforme est maintenu sur les parois latérales du récipient.

37. Procédé selon la revendication 36, dans lequel l'étape de commande comprend la détection de la température de deux portions différentes du récipient, une première desdites portions étant une zone du récipient à proximité de la zone d'impact d'une source de chaleur maintenant la température du récipient, et une deuxième desdites portions étant une zone du récipient qui est distante de la zone d'impact de ladite source de chaleur et ajuster l'une quelconque desdites vitesses selon la vitesse de changement dans la différence entre les deux températures détectées.

38. Procédé selon l'une quelconque des revendications 35 à 37, comprenant en outre l'étape consistant à commander la pression dans le récipient (1) pour empêcher un changement de phase de la phase liquide à la phase solide lorsque la solution est distribuée.

39. Procédé selon l'une quelconque des revendications 35 à 38, dans lequel la solution distribuée est fournie sous pression.

40. Procédé selon la revendication 39, dans lequel la solution distribuée est fournie à une pression d'au moins 4 x 10⁵ N/m²_{.}

41. Procédé selon l'une quelconque des revendications 35 à 40, dans lequel la solution est distribuée dans le récipient de vaporisation (1) par une buse (112).

42. Procédé selon la revendication 41, dans lequel la buse (112) et le débit d'écoulement sont sélectionnés et/ou commandés de façon qu'il y ait une différence de pression d'au moins 10⁵ N/m² à ladite buse.

43. Procédé selon l'une quelconque des revendications 28 à 42, comprenant en outre l'étape consistant à stocker la solution à concentrer dans une boucle d'échantillon (105) avant la distribution de ladite solution dans ledit récipient (1).

44. Procédé selon l'une quelconque des revendications 35 à 43, dans lequel ladite solution est amenée dans ledit récipient (1) ou ladite boucle d'échantillon (105) directement d'un processus précédent (113).

45. Procédé selon la revendication 44, dans lequel ledit processus précédent (113) est un parmi:
une chromatographie liquide de haute performance, la purification de composés organiques par chromatographie flash, la purification de composés organiques par chromatographie avec fluide supercritique à l'échelle préparative et la synthèse de composés organiques en utilisant des techniques d'écoulement continu.

46. Procédé selon l'une quelconque des revendications 28 à 45, dans lequel l'étape de maintien de la température du récipient (1) comprend la détection de la température du récipient avec un capteur de température non-contact (21).

47. Procédé selon l'une quelconque des revendications 28 à 46, dans lequel le récipient (1) possède une embouchure (3) à une extrémité à travers laquelle la solution est distribuée dans le récipient, et le solvant qui s'est évaporé est retiré du récipient, et l'axe de rotation (72) passe à travers cette embouchure.

48. Procédé selon l'une quelconque des revendications 28 à 47, dans lequel le récipient est sensiblement rotationnellement symétrique autour d'un axe longitudinal (70), et en ce que l'axe longitudinal est basculé au loin de l'axe de rotation (72).

49. Procédé selon la revendication 48, dans lequel l'axe de rotation (70) est basculé de l'axe longitudinal (72) du récipient (1) selon entre 0 et 6 degrés.
